# EUROPEAN PATENT APPLICATION

(11) **EP 4 413 850 A1**
(43) Date of publication of application: **14.08.2024**
(21) Application number: 24154745.4
(22) Date of filing: 30.01.2024
(51) Int. Cl.: A01G 18/20, A01G 24/22

(54) **USE OF THISTLE BIOMASS FOR MUSHROOMS CULTIVATION**

(30) Priority: 10.02.2023 IT 202300002277
(71) Applicant: Bioagritest SRL, 85010 Pignola (PZ) (IT)
(72) Inventor: CRESCENZI, Aniello, PIGNOLA (PZ) (IT); Fanigliulo, Angela, PIGNOLA (PZ) (IT); Falce, Michele, PIGNOLA (PZ) (IT); Rossano, Rocco, PIGNOLA (PZ) (IT)
(74) Representative: Conversano, Gabriele

(57) **Abstract**

The present Application relates to a cultivation substrate for mushrooms growing, a cultivation method and a kit for home cultivation comprising the same. Said substrate comprises at least 10% wt, with respect to dry weight, of biomasses deriving from plants belonging to Cardueae tribe.

## Description

The present invention relates to the use of biomass deriving from plants belonging to the *Cardueae* tribe as it is or in addition to conventional substrates for mushrooms cultivation, in particular for edible mushrooms cultivation.

Edible mushrooms are all those mushrooms that, introduced in the diet of a healthy subject not suffering from a particular problematic condition, do not cause any type of adverse reaction.

Mushrooms are a source of carbohydrates, proteins, mineral salts including calcium, iron, manganese, selenium, and vitamins including those of the group B and folates. They are also a source of antioxidant substances, considered useful for example to prevent ageing and damages caused to the body by free radicals, to strengthen the immune system and to reduce the LDL cholesterol level in blood.

The most common edible mushrooms comprise many species of the genus *Pleurotus* and genus *Cyclocybe* that, in addition to polysaccharides as chitin and glucans (alfa- and beta-glucans) with cholesterol-lowering, hypoglicemic and immuno-modulatory action, also contain proteins, vitamins, flavonoids, glycosides, tannins, phenols, steroids, terpenoids, alkaloids, and other antioxidants. Thanks to the many nutritional and nutraceutical properties, the demand on the market of edible mushrooms has been increasing very much. Consequently, it is needed to find methods for their cultivation which not only keep their properties unaltered but allow also a huge production.

Generally, the edible mushrooms are cultivated using conventional substrates based on lignocellulosic biomasses, such for example wheat, soya, bean and rice straw, saw dust, sugar cane bagasse, cottonseeds, rice chaff or bran, peanut shells, poplar saw dust, sorghum, corn, pea and cotton chips, and mixtures thereof.

Surprisingly, it has been found out that by adding biomass deriving from plants belonging to the *Cardueae* tribe to the above-mentioned substrates, important advantages can be obtained at production level, thus increasing cultivations yield and reducing production times with great economical advantages due to huge resources saving.

Such production increase represents a totally unexpected result, considering that *Cardueae* tribe comprises cardoon (*Cynara cardunculus L.*)*,* which contains phenolic substances which give it not only antioxidant, but also antimicrobial and antifungal properties.

Preliminary studies also highlighted an increase, in the fungal sporocarp, of the content of many components with high nutraceutical and nutritional activity, thus increasing further the added value of the mushrooms cultivated on cardoon containing substrates.

Therefore, the present invention relates to many cultivation substrates for mushrooms growing (in the following indicated also as *substrate*)*,* preferably edible and belonging to the genus *Pleurotus* or *Cyclocybe,* which comprise biomass deriving from plants belonging to the *Cardueae* tribe, in quantities preferably higher than 10% wt with respect to the substrate dry weight.

The *substrate* for mushrooms growing, according to the invention, has the other advantage to be completely obtainable by waste biomasses deriving from the agri-food and forestry field.

Moreover, said *substrates* are also apt to the cultivation of other species of fungi useful in the agricultural field and used as biocontrol agents, through competition mechanisms, antibiosis, parasitism, induced resistance in plants, etc. These comprise for example species of genus *Trichoderma,* as *T. asperellum, T. harzianum, T. viridae* and *T. hamatum* and the species *Gliocladium* as *T. roseum.*

The present invention also relates a method for the cultivation of edible mushrooms belonging to genera *Pleurotus* and *Cyclocybe,* which provides the indoor production on substrates comprising a biomass deriving from plants belonging to *Cardueae* tribe, in quantities preferably higher than 10% wt with respect to the substrate dry wight.

In comparison to the use of conventional substrates for mushrooms cultivation, the use of cultivation substrates according to the present invention, from a production point of view, allows to obtain one or more of the following advantages:
- mycelium faster growing, with consequent reduction of the incubation times needed for the production of infunged cakes;
- reduction of the time needed for the production of sporocarps;
- higher production in terms of weight of the sporocarps produced for substrate unit;
- higher production in the first two sprints, with consequent better energy efficiency in the production process, and so, with a sensible reduction of production costs (reduction of water, energy, work, space consumption, etc.) and so a strong increase of cultivation profitability;
- increase of the content of substances with antioxidant activity in sporocarps;
- increase of the content of nutritional substances in sporocarps;
- possibility to produce useful mushrooms with very high concentration of Colony Forming Units (CFU) to be used for the production of pesticides or to be used for compost production.

By means of the invention, it is in fact possible to obtain, in comparison to the use of conventional substrates, an improvement of one or more nutraceutical properties of the cultivated edible mushrooms, such for example the antiradical activity, the content of ascorbic acid and total polyphenols.

Finally, it is important how the use of waste biomass of the cardoon agricultural industry in the production of the *substrate* for mushrooms cultivation allows to use, as a mixture, by-products of the milling industry which are difficult to be disposed of (for example spelt chaff), which would not be used alone in the substrate production process, but which represent a special waste.

The present invention will be described in the following, with reference to the following figures:
Fig. 1 shows an example of measurement of the mycelium development in: a) vertical (D1); b) horizontal (D2) direction in the tests for the evaluation of the colonization speed of the substrate by the mycelium.
Fig. 2 shows a histogram representing the days needed for the colonization of the substrate with P. *eryngii*; the different letters on the columns correspond to values with statistically significant differences for P = 0.05.
Fig. 3 shows a histogram representing the days needed for the colonization of the substrate with A. *aegerita;* the different letters on the columns correspond to values with statistically significant differences for P = 0.05.
Fig. 4 shows a histogram representing the days needed for the colonization of the substrate with *G*. *roseum;* the different letters on the columns correspond to values with statistically significant differences for P = 0.05.
Fig. 5 shows the production difference of sporocarps of *P*. *eryngii* expressed in % with respect to the standard.
Fig. 6 shows the production difference of sporocarps of A. *aegerita* expressed in % with respect to the standard.
Fig. 7 shows productions (U.F.C./g of fungal culture) of *Gliocadium roseum* detected after 9 incubation weeks of the infunged substrate at 28°C.
Fig. 8 shows productions (U.F.C./g of fungal culture) of *T. viridae* detected after 8 incubation weeks of the infunged substrate at 28°C.
Fig. 9 shows results of nutraceutical analysis carried out on sporocarps grown on the example substrates.
Fig. 10 shows the Relative Antioxidant Capacity Index (RACI) calculated on sporocarps grown on the example substrates.

The substrate for mushrooms growing according to the invention comprises a lignocellulosic matrix represented by one or more components and made up of vegetal biomass, preferably constituted by vegetal waste or milling industry waste (for example wheat bran and straw, corn chips, spelt chaff, cardoon chips). So, said lignocellulosic matrix comprises at least a portion (not less than 10% w/w, preferably at least 15%, more preferably at least 20%, yet more preferably at least 30% w/w, advantageously at least 40% w/w) deriving from plants belonging to Asteracee family, *Cardueae* tribe, preferably belonging to one or more species chosen among *Cynara cardunculus* or *Silybum marianum* or *Carthamus tinctorius.* These last species have the advantage to allow the exploitation of barren areas with not so favorable weather. Lignocellulosic biomass deriving from multiannual plants of *Cynara cardunculus* (cardoon) is preferred, since it has a vegetal mass at least 10 times greater than the other lignocellulosic matrices usually used (for example wheat, rice, barley, corn, oat, rye, sorghum, millet, triticale etc.) for the substrate production.

Said lignocellulosic biomass comprises the plant epigean portion, which can be obtained after the plant harvesting (for example the stem or stalk with respective branching, the leaves and flower head or the portion of the flower head remaining after threshing of the seed destined to pressing or oil extraction).

Cardoon epigean lignocellulosic biomass is mainly made up of a polysaccharide component (cellulose or hemicellulose), lignin, ashes and simple sugars (disaccharides, as saccharose, and monosaccharides as glucose, cellobiose, xylose, galactose, mannose, arabinose, inulin and other secondary products) which can be used by the mushroom as carbon source for growing.

The *substrates* for mushrooms growing according to the invention comprise also preferably:
- at least a stabilizer or pH adjusting agent, preferably calcium carbonate,
- a biomass rich in simple sugars, for example a byproduct of the sugar industry deriving from sugar beet as energy source (exhausted beet pulp).

In said substrates the lignocellulosic biomass (comprising the biomass from *Cardueae*) and said biomass rich in simple sugars are provided with a dry weight ratio preferably of 1:1.

Generally, both concerning the lignocellulosic component (comprising cardoon biomass) and the component rich in simple sugars, the use of biomass deriving from agricultural waste products and from food production waste is preferred.

For example, said biomass rich in simple sugars is preferably chosen among exhausted beet pulp, potato skins, waste fruit and cereal processing residues. Biomass from plants belonging to *Cardueae* tribe constitutes preferably at least a quarter of the lignocellulosic biomass of the substrate for mushrooms growing according to the invention.

Biomass from plants belonging to *Cardueae* tribe constitutes preferably from 11.6 to 46.5% wt with respect to the substrate dry weight. According to an aspect of the invention, the quantity of said biomass from plants belonging to *Cardueae* tribe is less than 46.5% wt.

According to a particularly preferred embodiment of the invention, the substrate for mushrooms growing comprises, with respect to the total weight of the substrate solid matrix:
- 40-55 parts, preferably 44-50 parts, more preferably 46.5 parts, of lignocellulosic biomass (wherein the biomass deriving from plants belonging to *Cardueae* tribe can vary from 11%, preferably from 11.6%, to 46.5% wt); the remaining lignocellulosic biomass is preferably obtained by cereals,
- 40-45 parts, preferably 42.8 parts of biomass deriving from beet,
- 5-15 parts, preferably 10.7 parts of calcium carbonate.

According to a more preferred aspect, said lignocellulosic biomass comprises, in addition to the biomass deriving from plants of *Cardueae* tribe, one or more components chosen among:
a) bran biomass and/or wheat straw, preferably at least in quantities from 11.6 parts with respect to the total solid substrate matrix,
b) corn chips biomass, preferably at least in quantities from 11.6 parts with respect to the total solid substrate matrix,
c) spelt chaff biomass, preferably at least in quantities from 11.6 parts with respect to the total solid substrate matrix.

The composition of the substrate according to the invention is correlated to the vegetal species originated by the biomasses used and to their processing. The total soluble solids comprise glucose, fructose and saccharose; the fiber content is variable and comprises cellulose, lignin, pectin and hemicellulose. Other minor components are proteins, lipids and ashes.

The substrate water content represents advantageously 65% wt with respect to the substrate weight at the inoculation.

Generally, biomass present in the substrate of the invention is for example in straw, bran, chips, shavings or saw dust form, with typically not homogeneous dimensions, able to guarantee a suitable porosity for a correct aeration inside the substrate mass. So, said biomass can be optionally subjected to one or more preliminary treatments apt to reduce its dimensions (preferably with granulometry less than 8-10 cm), for example one or more treatments chosen among comminution, grinding, crushing, milling, screening, mixing and/or one or more preliminary homogenization treatments.

Moreover, said biomass can be optionally subjected to one or more chemical or physical treatments apt to provide more cellulose and hemicellulose, to move away undesired species and to allow stabilization, storage and/or transport. Undesired species are for examples resins, oils, volatile compounds and pathogens which can inhibit the mycelium growing or can cause stains and imperfections and compromise the integrity of the mushrooms. To make its storage and transport easier, the *substrate* of the invention is preferably subjected to compression and forming in bales, little bales or cakes with variable dimensions from about 2.5 kg to 25 kg. As an alternative, it is used to fill polypropylene/glass bottles with aerated cap, reusable for more production cycles. In such case, the dimensions can reach 1 - 1.5 kg of substrate.

The substrate for mushroom growing according to the invention can be used advantageously in the main known methods for mushrooms cultivation, by varying the percentage of the various components so to adapt it to the cultivar of the mushroom which is intended to be cultivated. The substrate of the invention is particularly apt for the cultivation of fungi belonging to genera *Pleurotus* and *Cyclocybe* among the edible mushrooms, and *Trichoderma* and *Gliocladium* for fungi used in agriculture for the production of pesticides for the biological control of diseases of the cultivated plants or for the production of compost for fertility recovery of agricultural soils and for nursery use.

Examples of mushrooms belonging to genus *Pleurotus* which can be grown on said *substrate* are P. *ostreatus, P. eryngii, P. florida* and *P. cornucopiae* and in particular, *P*. *eryngii,* commonly known as king trumpet mushroom or King Oyster. Edible mushrooms belonging to genus *Cyclocybe* are for example *Cyclocybe aegerita* commonly known as poplar fieldcap or Poplar mushroom. The "useful" mushrooms species which can be grown on said substrate comprise instead *Tricodermaviridae, T. harzianum, T. asperellum* and, in the context of genus *Gliocadium* the *G*. *roseum.*

### Production process of infunged substrate

A second object of the present invention relates to a method for the cultivation of mushrooms, which provides the growing on a substrate comprising biomass deriving from plants belonging to *Cardueae* tribe, in quantities preferably higher than 10% wt with respect to the substrate dry weight.

In the method of mushrooms cultivation according to the invention, the substrate comprising biomass deriving from plants belonging to *Cardueae* tribe acts as substrate for mushrooms growing, providing the essential elements for a correct development of the fungal mycelium and the following differentiation and development of fructiferous bodies.

The method provides the grinding of the lignocellulosic portion up to obtain a mesh with variable dimensions from few mm to maximum 8-10 cm length. The optimal dimensions are 2-3 cm. The following hydration and mixing of all the components of the *substrate* is a fundamental operation in order to distribute uniformly the various components in the mass.

Then it follows the mass maturation for 24/36 h at ambient temperature.

By means of a semi- or completely automized system (and, in absence, also manually) the substrate is distributed in suitable containers (for example glass or plastic bottles) or placed in bags in thermo-resistant material having cylinder or parallelepiped shape, with variable weight from 1 to 25 kg, as a function of the species cultivated.

In order to prevent the growing of bacteria and other micro-pathogens which can infect or compete with the development of the fungal mycelium of interest to be cultivated, said biomass is subjected, before inoculation, to a pasteurization or sterilization process. The sterilization or pasteurization process has variable duration from few minutes (in autoclave at 121-134°C) to several hours (up to 24 h at 100°C), as a function of the container dimensions.

The thus sterilized/pasteurized substrate is then inoculated by dispersing in its mass a trigger constituted by fungal mycelium in liquid or solid suspension.

The little bales/bottles containing the inoculated substrate are placed in an aerated room with controlled ambient parameters (temperature, humidity and lighting), variable according to the fungal species.

During the incubation period the fungal mycelium realizes its development. At the end of the incubation period, is is induced to differentiation by thermal shock.

The infunged substrate is then transferred in production chamber or greenhouse (of sporocarps for edible mushrooms and durable spores for "useful" mushrooms) with controlled thermo-hygrometric parameters, of brightness and air composition. Particular attention is paid to the content of carbon dioxide present in atmosphere, able to influence production quality and quantity.

During the whole production period, the rooms are preferably disinfected, for example by using disinfectants (for example ozone or chlorine dioxide, as it is described in the method according to Patent application IT201700006102), sprayed in the ambient and by using ultraviolet light. The air present in the production rooms is replaced by means of suitable aeration and air filtration systems.

Edible mushrooms sporocarps harvest can be realized in one or more steps, called "sprints", according to the sporocarps growing speed and the dimensions reached (generally from 1 to 3 maximum), for example the 1th, 2nd and 3rd sprint. In order to optimize the production process (higher quality of the product and lower production costs), the production is tendentially concentrated in one, or two sprints, at most.

According to an aspect of the invention, there are used culture substrates containing various cultivation residues or milling industry waste. In particular, attention is paid to the species belonging to *Cardueae* tribe able to improve substantially both the quantity of fungal product obtainable for commercial product unit, and the content of substances in the mushroom food of particular value for nutrition and human health.

To such aim, some not limiting examples are given, which are apt to show the uniqueness of the invention.

### Examples

**Table 1 shows the composition of the substrates used in the tests (thesis) described in the following:**

| Table 1: composition of substrates used | | | |
|---|---|---|---|
| Example | THESIS | SUBSTRATE COMPOSITION | % solid matrix |
| 1 comparative | 1 | Wheat bran + wheat straw + corn chips | 15.5 + 15.5 + 15.5 |
| 1 | 1C | Wheat bran + wheat straw + corn chips + cardoon chips | 11.6 + 11.6 + 11.6 + 11.6 |
| 2 comparative | 2 | Wheat bran + wheat straw + Spelt chaff | 15.5 + 15.5 + 15.5 |
| 2 | 2C | Wheat bran + wheat straw + spelt chaff + cardoon chips | 11.6 + 11.6 + 11.6 + 11.6 |
| 3 comparative | 3 | Wheat straw + corn chips + spelt chaff | 15.5 + 15.5 + 15.5 |
| 3 | 3C | Wheat straw + corn chips + spelt chaff + cardoon chips | 11.6 + 11.6 + 11.6 + 11.6 |
| 4 comparative | Standard | Wheat straw | 46.5 |
| 4 | Cardoon | Cardoon chips | 46.5 |
| Common to all the | | Sugar beet pulp | 42.8 |
| substrates | CaCO3 | 10.7 | |

The tests described in the following have been realized in 0.9 l bottles with aerated cap. The inoculation of the substrate has been realized by means of 13 cm diameter patches of PDA colonized by the fungus, positioned at the centre of the bottle itself, following the above-described method for the infunged substrate production process.

### Evaluation of the colonization speed of the substrate by the mycelium

The times needed for the complete colonization of the substrate by the mycelium are shown.

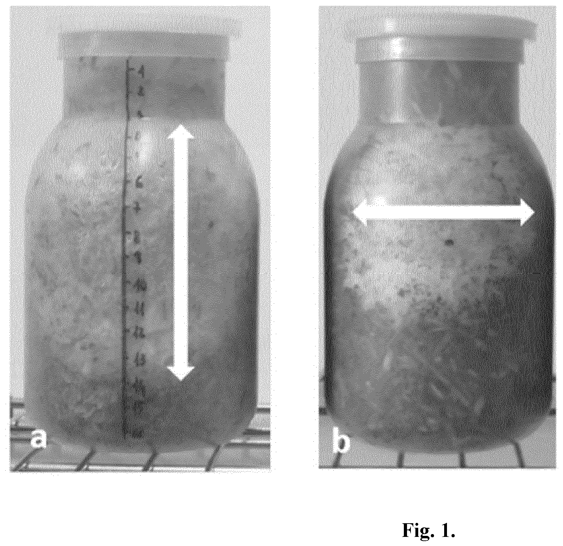

The colonization speed has been evaluated by measuring the development of the mycelium in vertical and horizontal direction (fig. 1).

The statistical analysis has been carried out by using XLSTAT 2008 program - Comparison between k samples (Kruskal-Wallis and Friedman tests); for each detection, different letters on the columns correspond to values with statistically significant differences.

### a) Pleurotus eryngii

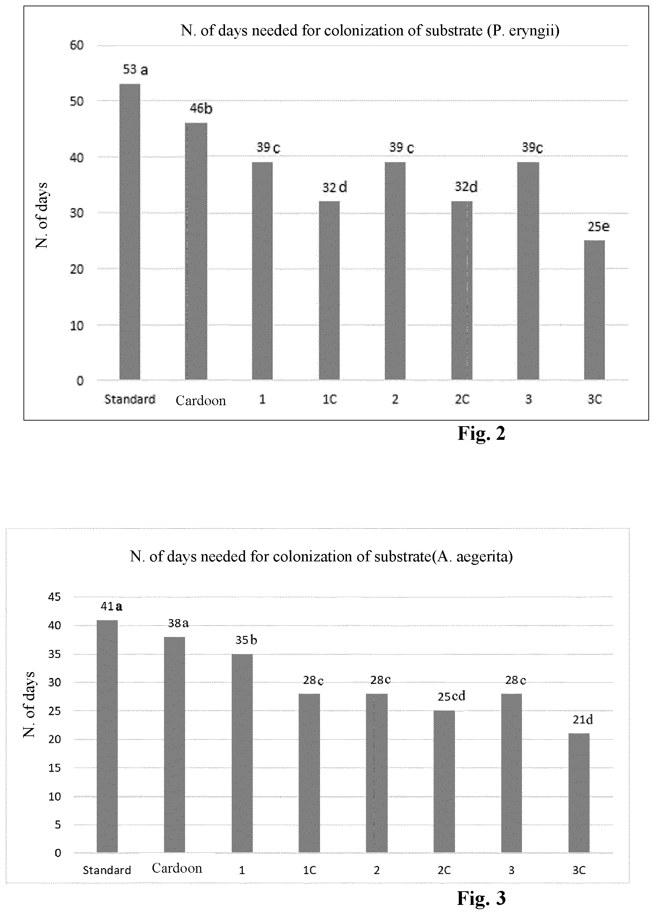

Table 1 shows the colonization values of the substrate by the mycelium of *P*. *eryingii,* expressed in mm. The results of the statistical analysis relative to such data are shown in figure 2.

Different letters on the columns correspond to values with statistically significant differences for P = 0.05.

**Table 2, relative to the mycelium colonization speed of Pleurotus eryngii, shows the colonization values of the substrate by the mycelium of P. eryngii, expressed in mm; each value represents the average of 5 repetitions. The value 315.00 mm represents the complete colonization of the substrate by the fungus, measured in direction D2.**

| Table 2: Mycelium growing speed (D2), *P. eryngii* | | | | | | | | |
|---|---|---|---|---|---|---|---|---|
| Thesis | Days post inoculation | | | | | | | |
| | 0 | 11 | 18 | 25 | 32 | 39 | 46 | 53 |
| Standard | 13.0 | 46.5 | 112.3 | 167.4 | 226.5 | 260.4 | 298.6 | 315.0 |
| Cardoon | 13.0 | 37.6 | 103.1 | 161.5 | 245.3 | 287.5 | 315.0 | |
| 1 | 13.0 | 60.8 | 128.0 | 215.8 | 298.3 | 315.0 | | |
| 1C | 13.0 | 69.4 | 165.2 | 265.4 | 315.0 | | | |
| 2 | 13.0 | 60.0 | 125.6 | 209.4 | 274.6 | 315.0 | | |
| 2C | 13.0 | 64.2 | 142.3 | 235.4 | 315.0 | | | |
| 3 | 13.0 | 62.6 | 122.2 | 201.6 | 283.0 | 315.0 | | |
| 3C | 13.0 | 104.5 | 232.5 | 315.0 | | | | |

The obtained data highlight that the colonization speed of the substrate is always higher in the theses where a mixture of lignocellulosic sources was used, in comparison to mono-component substrates. In particular, there was a halving of the times needed to complete the colonization of the substrate.

### b) Agrocybe aegerita

**Table 3 and figure 3 show the colonization values of the substrate by the mycelium of A. aegerita. Each value in table 3, expressed in mm, represents the average of 5 repetitions. The value 315.00 mm represents the complete colonization of the substrate by the fungus, measured in direction D2.**

| Table 3: Mycelium colonization speed of *Agrocybe aegerita* | | | | | | | | | | | |
|---|---|---|---|---|---|---|---|---|---|---|---|
| Thesis | Days post inoculation | | | | | | | | | | |
| | 0 | 10 | 14 | 18 | 21 | 25 | 28 | 32 | 35 | 38 | 41 |
| Standard | 13.0 | 24.0 | 39.0 | 68.0 | 98.0 | 138.0 | 175.0 | 224.0 | 257.0 | 290.0 | 315.0 |
| Cardoon | 13.0 | 28.0 | 48.0 | 84.0 | 117.0 | 156.0 | 199.0 | 238.0 | 285.0 | 315.0 | |
| 1 | 13.0 | 52.7 | 65.3 | 92.0 | 112.3 | 149.7 | 189.7 | 249.7 | 315.0 | | |
| 1C | 13.0 | 88.7 | 145.7 | 222.0 | 250.7 | 289.3 | 315.0 | | | | |
| 2 | 13.0 | 93.3 | 126.0 | 140.0 | 193.3 | 253.7 | 315.0 | | | | |
| 2C | 13.0 | 99.7 | 160.7 | 236.0 | 301.3 | 315.0 | | | | | |
| 3 | 13.0 | 91.0 | 132.3 | 176.0 | 210.0 | 281.3 | 315.0 | | | | |
| 3C | 13.0 | 86.7 | 147.3 | 245.0 | 315.0 | | | | | | |

The obtained data highlight that the colonization speed of the substrate is always higher in the theses where a mixture of lignocellulosic sources was used, in comparison to mono-component substrates. In all the multi-component mixtures, the presence of the cardoon allowed the mycelium to develop always faster than the cardoon-free comparison thesis.

### c) Gliocadium roseum

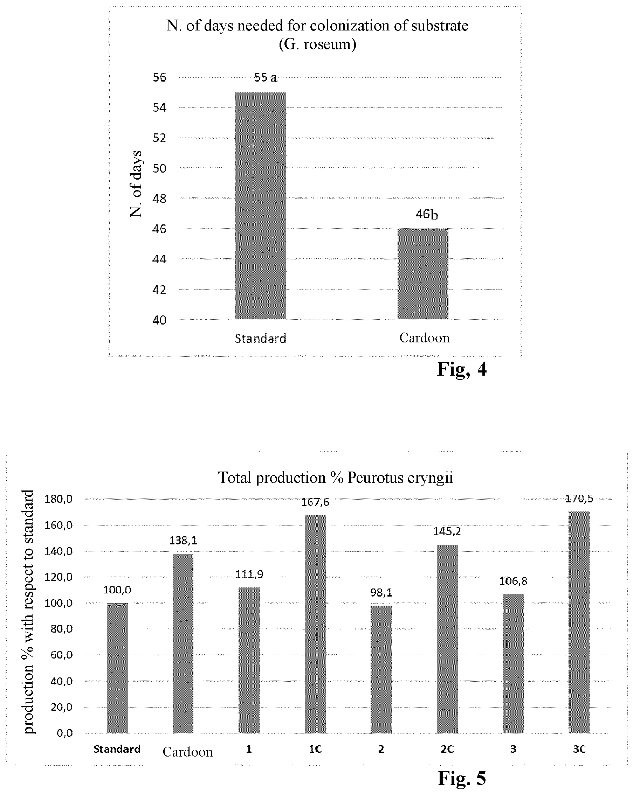

**Table 4 and figure 4 show the colonization values of the substrate by the mycelium of Gliocardium roseum, expressed in mm.**

| Table 4: Mycelium colonization speed of *Gliocadium roseum* | | | | | | | | |
|---|---|---|---|---|---|---|---|---|
| Thesis | Days after inoculation | | | | | | | |
| | 0 | 11 | 18 | 25 | 32 | 39 | 46 | 55 |
| Standard | 13.0 | 50.8 | 85.6 | 142 | 226.5 | 275.5 | 302 | 315 |
| Cardoon | 13.0 | 54.5 | 79.5 | 138 | 235.5 | 286.4 | 315 | |

### Evaluation of the productions

The productions obtained for each sprint and in total are shown. For the evaluation of the present study, only the first two sprints have been considered. The statistical analysis has been carried out by using XLSTAT 2008 program - Comparison between k samples (Kruskal-Wallis and Friedman tests); for each detection, different letters on the columns correspond to values with statistically significant differences.

### Pleurotus eryngii

**Table 5 and figure 5 show the evaluation of the production of P. eryngii. Table 5 shows the values of the productions obtained for each single sprint and the total production in sporocarps of P. eryngii, expressed in weight (g). Each value represents the average of 5 repetitions. Different letters next to the total values correspond to values with statistically significant differences for P = 0.05.**

| Table 5: Productions detected of marketable sporocarps of *P*. *eryngii* | | | | | | |
|---|---|---|---|---|---|---|
| Thesis | I sprint | | II Sprint | | Total | |
| Standard | 95.0 | | 81.0 | | 176.0 a | |
| Cardoon | 139.6 | | 103.4 | | 243.0 b | |
| 1 | 112.0 | | 85.0 | | 197.0 a | |
| 1C | 225.0 | | 70.0 | | 295.0 c | |
| 2 | 107.4 | | 65.2 | | 172.6 a | |
| 2C | 138.4 | | 117.2 | | 255.6 b | |
| 3 | 110.0 | | 78.0 | | 188.0 a | |
| 3C | 161.0 | | 139.0 | | 300.0 c | |

### a) Agrocybe aegerita

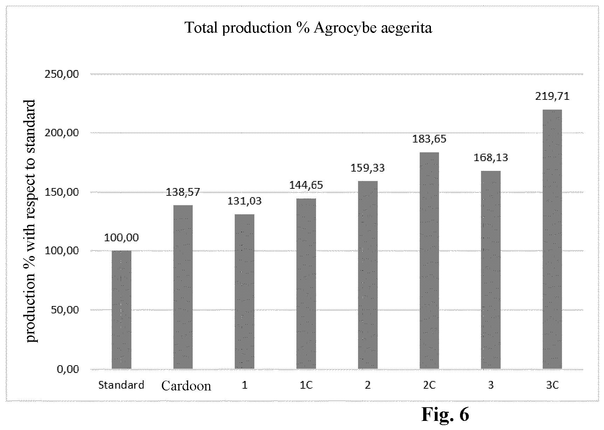

Table 6 and figure 6 show the evaluation of the production of A. *aegerita.*

**Table 6 shows the values of the productions obtained for each sprint and the total production of the sporocarps of A. aegerita, expressed in weight (g) . Each value represents the average of 5 repetitions. Different letters next to the total values correspond to values with statistically significant differences for P = 0.05.**

| Table 6: Productions detected of marketable sporocarps of *A*. *aegerita* | | | |
|---|---|---|---|
| Thesis | I sprint | II sprint | Total |
| Standard | 60.2 | 35.2 | 95.4 a |
| Cardoon | 70.4 | 61.8 | 132.2 b |
| 1 | 84.8 | 40.2 | 125.0 b |
| 1C | 86.8 | 51.2 | 138.0 b |
| 2 | 91.8 | 60.2 | 152.0 c |
| 2C | 103.2 | 72 | 175.2 d |
| 3 | 86.2 | 74.2 | 160.4 c |
| 3C | 127 | 82.6 | 209.6 e |

### b) Gliocadium roseum

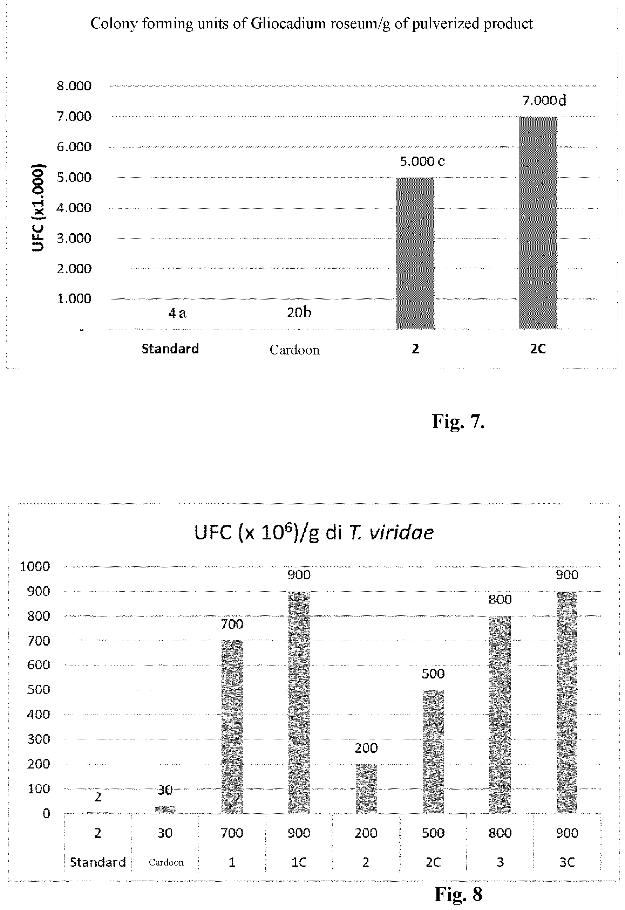

Table 7 and figure 7 show the evaluation of the production of G. *Roseum.*

**Table 7 shows the values of the productions expressed in UFC (×10³)/g detected after 9 incubation weeks of the substrate infunged by Gliocadium at 28°C. Each value represents the average of 5 repetitions. The substrate infunged with G. roseum has been pulverized with grinder and its UFC have been determined. In the following its shelf life has been evaluated until the 4^{th} month.**

| Table 7: Shelf life of *Gliocadium roseum* calculated at 4 different storage times of the powders containing UFC, Tamb, 0 - 1 - 2 - 4 months | | | | |
|---|---|---|---|---|
| Thesis | T0 | T1 | T2 | T4 |
| Standard | 4x10³ | 9x10² | 2x10² | 5x10¹ |
| Cardoon | 2x10⁴ | 6x10³ | 8x10² | 2x10² |
| 1 | 8x10⁵ | 6x10⁴ | 8x10³ | 9x10² |
| 1C | 6x10⁵ | 2x10⁴ | 9x10³ | 2x10³ |
| 2 | 5x10⁶ | 2x10⁵ | 2x10⁴ | 9x10² |
| 2C | 7x10⁶ | 3x10⁵ | 5x10⁴ | 2x10³ |
| 3 | 8x10⁶ | 2x10⁵ | 5x10⁴ | 3x10³ |
| 3C | 6x10⁶ | 3x10⁴ | 5x10³ | 4x10² |

### c) Trichoderma viridae

**Table 8 shows the values of the productions expressed in UFC (×10³)/g detected after 8 incubation weeks of the substrate infunged by T. viridae at 28°C. Each value represents the average of 5 repetitions. The substrate infunged with T. viridae has been pulverized with grinder and its UFC have been determined. In the following its shelf life has been evaluated until the 4^{th} month.**

| Table 8: Shelf life of *T. viridae* calculated at 4 different storage times of the powders containing UFC, Tamb, 0 - 1 - 2 - 4 months | | | | |
|---|---|---|---|---|
| Thesis | T0 | T1 | T2 | T4 |
| *Standard* | 2x10⁶ | 2x10⁵ | 2x10⁴ | 9x10³ |
| Cardoon | 3x10⁷ | 9x10⁶ | 2x10⁶ | 8x10⁵ |
| 1 | 7x10⁸ | 4x10⁷ | 9x10⁵ | 2x10⁵ |
| 1C | 9x10⁸ | 8x10⁷ | 2x10⁶ | 9x10⁵ |
| 2 | 2x10⁸ | 5x10⁷ | 5x10⁶ | 4x10⁵ |
| 2C | 5x10⁸ | 8x10⁷ | 5x10⁶ | 9x10⁵ |
| 3 | 8x10⁸ | 2x10⁷ | 5x10⁶ | 8x10⁵ |
| 3C | 9x10⁸ | 2x10⁸ | 2x10⁷ | 4x10⁶ |

### Nutritional parameters evaluation

Table 8 shows the results of the analysis carried out (in a SINAL accredited lab) of the main nutritional parameters of the main product (sporocarps grown on standard substrates and containing cardoon), according to the official methods of analysis shown in the following.

In particular, there have been analyzed: humidity, dry substance at 105°, ashes, proteins, total fatty substances, dietary fiber, carbohydrates, energy value, sodium, sugar composition and acidic composition.

The analysis has been carried out by using, as matrix, sporocarps harvested in the first sprint from 3 repetitions (intended as 3 different cultivations in parallel) for each of the following thesis: standard and cardoon.

| *Table 9: nutritional analysis on sporocarps grown on standard and cardoon containing substrates* | | | | | | | | |
|---|---|---|---|---|---|---|---|---|
| DESCRIPTION | *STANDARD* | | | *CARDOON* | | | MEASURING UNIT | LOQ |
| CENTESIMAL ANALYSIS | *I REP* | *II REP* | *III REP* | *I REP* | *II REP* | III REP | | |
| Humidity (from calculation)¹ | *87.0* | *87.2* | *86.8* | *85.7* | *85.3* | 86.4 | g/100 g | 3 |
| Dry substance at 105°C¹ | *13.0* | *12.8* | *13.2* | *14.3* | *14.7* | 13.6 | g/100 g | 0.1 |
| Ashes² | *0.94* | *0.92* | *0.97* | *0.85* | *0.87* | 0.89 | g/100 g | 0.05 |
| Proteins³ | *0.24* | *0.25* | *0.26* | *0.33* | *0.35* | 0.39 | g/100g N | 0.1 |
| Total fatty substances⁴ | *< 0.05* | *< 0.05* | *< 0.05* | *< 0.05* | *< 0.05* | < 0.05 | g/100 g | 0.05 |
| Dietary fiber⁵ | *3.13* | *3.20* | *3.25* | *3.81* | *3.53* | 3.93 | g/100 g | 0.5 |
| Carbohydrates (from calculation)⁶ | *8.9* | *9.2* | *8.7* | *10.1* | *9.21* | 10,8 | g/100 g | - |
| Energy value (Kcal)⁷ | *45* | *46* | *43* | *48* | 46 | 49 | Kcal/100 g | - |
| Energy value (KJ)⁷ | 190 | 194 | 179 | 203 | 195 | 207 | KJ/100 g | - |
| Sodium⁸ | 0.007 | 0.005 | 0.008 | 0.006 | 0.006 | 0.005 | g/100 g | 0.005 |

| COMPOSITION OF SUGARS⁹ | | | | | | | | |
|---|---|---|---|---|---|---|---|---|
| Fructose | 1.74 | 1.83 | 1.61 | 0.64 | 0.58 | 0.53 | g/100 g | 0.01 |
| Galactose | < 0.01 | < 0.01 | < 0.01 | <0.01 | < 0.01 | < 0.01 | g/100 g | 0.01 |
| Glucose | 0.44 | 0.46 | 0.42 | <0.01 | < 0.01 | < 0.01 | g/100 g | 0.01 |
| Maltose | < 0.01 | < 0.01 | < 0.01 | <0.01 | < 0.01 | < 0.01 | g/100 g | 0.01 |
| Saccharose | 0.99 | 0.92 | 0.79 | 1.80 | 1.92 | 1.96 | g/100 g | 0.01 |

| ACIDIC COMPOSITION¹⁰ | | | | | | | | |
|---|---|---|---|---|---|---|---|---|
| Butyric acid (C4:0) | < 0.01 | < 0.01 | < 0.01 | < 0.01 | < 0.01 | < 0.01 | % | 0.01 |
| Capronic acid (C6:0) | <0.010 | <0.010 | <0.010 | < 0.010 | < 0.010 | < 0.010 | % | 0.010 |
| Caprylic acid (C8:0) | 1.92 | 1.88 | 1.81 | < 0.010 | < 0.010 | < 0.010 | % | 0.010 |
| Capric acid (C10:0) | 1.45 | 1.33 | 1.53 | < 0.010 | < 0.010 | < 0.010 | % | 0.010 |
| Lauric acid (C12:0) | <0.010 | <0.010 | <0.010 | < 0.010 | < 0.010 | < 0.010 | % | 0.010 |
| Tridecanoic acid (C13:0) | <0.010 | <0.010 | <0.010 | < 0.010 | < 0.010 | < 0.010 | % | 0.010 |
| Myristic acid (C14:0) | 0.18 | 0.12 | 0.13 | 0.27 | 0.29 | 0.31 | % | 0.010 |
| Myristoleic acid (C14:1) | <0.010 | <0.010 | <0.010 | < 0.010 | < 0.010 | < 0.010 | % | 0.010 |
| Pentadecanoic acid (C15:0) | <0.010 | <0.010 | <0.010 | < 0.010 | < 0.010 | < 0.010 | % | 0.010 |
| Palmitic acid (C16:0) | 11.22 | 14.25 | 13.70 | 15.26 | 16.32 | 17.01 | % | 0.010 |
| Palmitoleic acid (C16:1) | 0.085 | 0.103 | 0.098 | 0.14 | 0.16 | 0.13 | % | 0.010 |
| Trans-hexadecenoic acid (C16:1 trans) | 0.26 | 0.22 | 0.24 | 0.28 | 0.24 | 0.33 | % | 0.010 |
| Heptadecanoic acid (C17:0) | <0.010 | <0.010 | <0.010 | < 0.010 | < 0.010 | < 0.010 | % | 0.010 |
| Heptadecenoic acid (C17:1) | <0.010 | <0.010 | <0.010 | < 0.010 | < 0.010 | < 0.010 | % | 0.010 |
| Stearic acid (C18:0) | 4.19 | 4.87 | 4.69 | 3.86 | 3.77 | 3.01 | % | 0.010 |
| Oleic acid (C18:1) | 46.43 | 43.60 | 44.43 | 49.82 | 51.22 | 54.12 | % | 0.010 |
| Elaidic acid (C18:1 trans) | <0.010 | <0.010 | <0.010 | < 0.010 | < 0.010 | < 0.010 | % | 0.010 |
| Linoleic acid (C18:2) | 32.24 | 33.24 | 31.64 | 28.92 | 28.92 | 28.92 | % | 0.010 |
| Linoealidic acid (C18:2 trans) | 0.14 | 0.10 | 0.11 | 0.096 | 0.085 | 0.073 | % | 0.010 |
| Linolenic acid (C18:3) | 0.09 | 0.13 | 0.12 | 0.11 | 0.21 | 0.17 | % | 0.010 |
| Arachidic acid (C20:0) | 0.34 | 0.25 | 0.28 | 0.26 | 0.21 | 0.19 | % | 0.010 |
| Eicosenoic acid (C20:1) | 0.041 | 0.061 | 0.054 | 0.059 | 0.066 | 0.072 | % | 0.010 |
| Behenic acid (C22:0) | 0.32 | 0.35 | 0.26 | 0.33 | 0.25 | 0.29 | % | 0.010 |
| Erucic acid (C22:1) | 0.113 | 0.084 | 0.096 | 0.057 | 0.052 | 0.077 | % | 0.010 |
| Lignoceric acid (C24:0) | 0.49 | 0.40 | 0.44 | 0.54 | 0.49 | 0.67 | % | 0.010 |
| Monounsaturate d fatty acids | 42.33 | 41.88 | 45.23 | 50.36 | 59.31 | 55.99 | % | 0.010 |
| Unsaturated fatty acids | 76.19 | 74.10 | 77.10 | 79.48 | 87.22 | 92.41 | % | 0.010 |
| Saturated fatty acids | 21.88 | 23.44 | 22.90 | 20.52 | 19.12 | 17.99 | % | 0.010 |

| | | | | | | | | |
|---|---|---|---|---|---|---|---|---|
| Legend: 1: reports ISTISAN 96/34, page 7 Method B 2: DM 03/02/1989 G.U.S.O. n. 168 of 20/07/1989 met.13 3: reports ISTISAN 1996/34, page 13 4: reports ISTISAN 96/34 met. A, page 395: Reports ISTISAN 1996/34, page 68 6: DLgs n° 77 16/02/1993 GU n° 69 24/03/1993; reports ISTISAN 1996/34 page 39, page 13, page 77, page 68, page 7 7: DLgs n° 77 16/02/1993 GU n° 69 24/03/1993; DM 18/03/2009 GU n°120 26/05/2009 8: M.I. 32 Ed.3 rev. 0 2019 9: reports ISTISAN 96/34, page 66 10: reports ISTISAN 1996/34, page 47 | | | | | | | | |

The two samples (standard and cardoon) have been analyzed in triplicate, the results obtained have been expressed as average ± s.d. Data have been analyzed by means of one-way ANOVA; the comparisons between the two theses of the various measured parameters have been carried out by means of the Student's t-test.

The substrate containing cardoon has significantly higher values concerning dry substance content, proteins, dietary fiber and carbohydrates, while in case of ashes (minerals) the data are significantly lower than the standard. Concerning the content of total lipids, both have not-comparable values, since under the detectability limit (< 0.05 g/100 g).

Among the most representative sugars, cardoon has a greater glucose and fructose content and lower content of saccharose (P < 0.01).

Concerning the acyl profile, the sporocarps produced on cardoon containing substrate have a content of unsaturated fatty acids higher than the standard, in both samples, the most represented ones are oleic acid followed by linoleic acid, while, among the saturated fatty acids, the most abundant are those with long chain (palmitic and stearic acid) followed by caprylic and capric acid.

**Table 10 shows the statistical analysis of the results of the nutritional analyses carried out on sporocarps grown on standard and cardoon containing substrates.**

| Table 10: statistical analysis of results of nutritional analyses carried out on sporocarps grown on standard and cardoon containing substrates | | |
|---|---|---|
| | Standard | Cardoon |
| Parameter (g/100g) | | |
| Humidity | 86.80 ± 0.10* | 85.70 ± 0.15 |
| Dry substance | 13.20 ± 0.10* | 14.30 ± 0.20 |
| Ashes | 0.97 ± 0.06* | 0.85 ± 0.02 |
| Proteins | 0.26 ± 0.01* | 0.33 ± 0.02 |
| Fats | < 0.05 | < 0.05 |
| Dietary fiber | 3.25 ± 0.09* | 3.81 ± 0.13 |
| Carbohydrates | 8.70 ± 0.25* | 10.10 ± 0.43 |
| Energy value (kcal/100g) | 43.00 ± 1.06** | 48.00 ± 0.99 |

| *Main sugars* (g/100g) | | |
|---|---|---|
| Fructose | 1.61 ± 0.11** | 0.64 ± 0.05 |
| Glucose | 0.42 ± 0.03** | < 0.01 |
| Saccharose | 0.79 ± 0.10** | 1.80 ± 0.18 |
| *Main FA* (%) | | |
| oleic A, (C18:1) | 44.43 ± 0.15** | 49.82 ± 0.11 |
| Linoleic A, (C18:2) | 31.64 ± 0.42* | 28.92 ± 0.22 |
| Palmitic A, (C16) | 13.70 ± 0.29* | 15.26 ± 0.10 |
| Stearic A, (C18) | 4.69 ± 0.10* | 3.86 ± 0.09 |
| Caprylic A, (C8) | 1.88 ± 0.02* | < 0.01 |
| Capric A, (C10) | 1.53 ± 0.04* | < 0.01 |
| Saturated FA (%) | 22.90 ± 0.12* | 20.52 ± 0.13 |
| unsaturated FA (%) | 77.10 ± 0.41* | 79.48 ± 0.56 |

| | | |
|---|---|---|
| * indicates statistically significant differences p < 0, 05 ** indicates statistically significant differences p < 0,01 | | |

### Evaluation of nutraceutical properties Preparation of the extracts

Frozen aliquots of fungi (100 g) have been lyophilized and pulverized in a mortar with liquid nitrogen. For each sample, two aliquots have been prepared to be subjected to extraction with 80% ethanol (1:10, w/v). The extractions have been carried out in 100 mL flasks, keeping the suspensions in stirring for 48 h at 20° on orbital stirrer at 225 rpm. In the following, the extracts have been recovered by centrifugation (10000 g, 4 min at 20°C) and filtrated on Whatman 3 paper discs. Some aliquots of the extracts have been dried while the remaining ones have been stored in a dark place at 4°C and used for the following analysis.

### Determination of polyphenolic content (Total Phenolics Content, TPC)

The polyphenolic content of the alcohol extracts has been determined spectrophotometrically with *Folin-Ciocalteu* reagent (Singleton et al., Meth.Enzymol. 1999, 299: 152-178), with some modifications. To 0.5 mL of reagent, newly prepared in water (1:10), 0.1 mL of extracts have been added. After 3 minutes, 0.4 mL of 7.5% sodium carbonate have been added in water. The mixture has been stirred and incubated in a dark place at 25°C for 90 minutes. The polyphenolic content has been determined by measuring absorbance at 765nm, the result has been expressed in terms of mg of gallic acid equivalent/g of extract (mg GAE/g extract), by using a calibration curve obtained with different concentrations of gallic acid in 80% ethanol.

### Determination of the reducing capacity (Total Reducing Capacity, TRC)

The total reducing capacity of the extracts has been determined according to the method described by Oyaizu (J. Nutr. Diet. 1986, 44: 307-315) with some modifications. Aliquots of 0.5 mL of extract diluted in 0,2 M phosphate buffer (pH 6.5) have been added to 0.5 mL of 1% potassium ferrocyanide and incubated for 30 minutes at 50°C, at the end of which 0.25 mL of trichloroacetic acid have been added. The samples have been then centrifugated (10 minutes at 4000 x r). In the following, 0.5 mL of supernatant have been mixed with 0,5 mL of deionized water and 0.1 mL of 0.1% ferric chloride. After spectrometric reading at 700 nm, the reducing capacity has been expressed in terms of mg of gallic acid equivalent/g of extract (mg GAE/g extract), by using a calibration curve obtained with different concentrations of gallic acid in 80% ethanol.

### Determination of the antioxidant activity

### i. Radical scavenging capacity of radical DPPH^{·} (2,2-Diphenyl-1-pricryl-hydrazyl)

DPHH is a stable chromophore radical which in the radical form has an intense violet coloration with maximum absorption at 517 nm. Aliquots of 0.2 mL of the extracts at different concentrations have been added to 0.8 mL of 0.2 mM DPPH in ethanol. After 30 minutes of incubation in a dark place at 25°C, the absorbance at 517 nm has been measured (Larocca et al., Food Funct. 2017, 8: 3288-3296*).*

The radical scavenging activity, expressed as percentage of absorbance decrease, is calculated according to the equation: I (%) = [(ACTRL - ATEST)/(ACTRL]*100, where ATEST is the absorbance of the radical cation after the addition of alcoholic extract (antioxidant), while ACTRL is the absorbance of the negative control, i.e. the radical cation after the addition of an ethanol equivalent volume without the addition of antioxidant, in order to obtain the absorbance of the solution with the not inhibited chromogen.

The antioxidant activity has been expressed as IC50, the IC50 value representing the extract concentration (mg/mL) able to capture 50% of radicals. The IC50 value has been calculated from the regression line obtained from the experimental data of % of inhibition as a function of the extract concentration.

### ii. Radical scavenging capacity of radical O2^{·}

The reaction mixture has been prepared by adding 0.1 mL of ethanolic extract to 0.1 mL of 2 mM NADH and 0.1 mL of 50 µM nitro blue tetrazolium. In the following, 0.1 mL of 50 µM phenazine methosulfate have been added, after 5 min of incubation at ambient temperature the spectrophotometric reading has been carried out at 560 nm (Larocca et al., J. Food Biochem. 2018, e12580). The scavenging activity of the radical superoxide by the extract has been measured as above described in paragraph i.

### iii. Radical scavenging capacity of radical NO'

The nitric oxide generated by sodium nitroprusside has been measured by means of reagent Griess (Laroca et al., J. Food Biochem. 2018, e12580). Aliquots (0.3 mL) of different concentrations of the extracts have been added to 0,3 mL of sodium nitroprusside (20 nM) in aqueous solution and incubated at ambient temperature for 60 minutes. In the following, 0.3 mL of Griess reagent (1 g in 25 mL of water) have been added. The absorbance of the formed chromophore has been measured at 560 nm. The scavenging activity with respect to the radical NO by the extracts has been measured as above described in paragraph i.

### iv. Determination of the ascorbic acid

0.5 g of anhydrous powder have been treated with 0.5 mL of 1% metaphosphoric acid (in water) for 60 minutes, by continuous stirring. After centrifugation at 12000 r, for 10 minutes at ambient temperature, 0.5 mL of supernatant have been mixed with 4.0 mL of 3 mM 2,6-dichloroindophenol in water, and in the following have been subjected to spectrophotometric reading at 515 nm (Klein and Perry, J. Food Sci. 1982, 47: 941-948)*.* The content of ascorbic acid has been extrapolated by a calibration curve obtained by using L-ascorbic acid (1-100 µg/mL) as standard, and expressed as µg ascorbic acid/g dry weight.

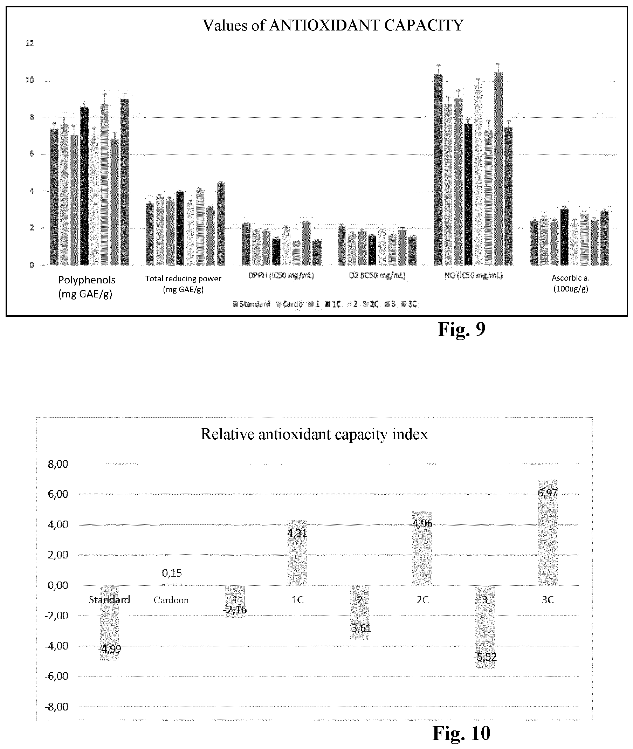

**Table 11 and figure 9 show the results of the nutraceutical analyses carried out on sporocarps grown on standard, cardoon and cardoon containing substrates, object of the present invention. The significance is referred to each thesis with respect to its own control.**

| Table 11: Results of nutraceutical analyses carried out on sporocarps grown on the various examined substrates | | | | | | |
|---|---|---|---|---|---|---|
| THESIS | *^{a}*polyphenols | *^{b}*reducing capacity | *^{c}*DPPH, | *d*_{O} - 2 | *e·*NO | *^{f}*ascorbic a. |
| | (mg GAE/g) | (mg GAE/g) | (IC50 mg/mL) | (IC50 mg/mL) | (IC50 mg/mL) | (µg/g) |
| Standard | 7.41 ± 0.28 | *3.35 ± 0.14 | *2.28 ± 0.01 | *2.13 ± 0.08 | *10.35 ± 0.51 | 240.22 ± 7.24 |
| Cardoon | 7.63 ± 0.38 | 3.73 ± 0.08 | 1.87 ± 0.03 | 1.66 ± 0.09 | 8.74 ± 0.40 | 255.52 ± 9.98 |
| 1 | *7.06 ± 0.51 | *3.53 ± 0.13 | *1.87 ± 0.06 | *1.82 ± 0.09 | *9.04 ± 0.41 | *235.00 ± 13.23 |
| 1C | 8.56 ± 0.22 | 3.98 ± 0.09 | 1.42 ± 0.07 | 1.59 ± 0.07 | 7.67 ± 0.21 | 304.41 ± 12.99 |
| 2 | *7.04 ± 0.41 | *3.42 ± 0.08 | *2.08 ± 0.44 | *1.88 ± 0.07 | *9.79 ± 0.31 | *229.50 ± 18.33 |
| 2C | 8.72 ± 0.55 | 4.06 ± 0.10 | 1.38 ± 0.03 | 1.63 ± 0.06 | 7.32 ± 0.50 | 277.86 ± 16.28 |
| 3 | *6.82 ± 0.39 | *3.12 ± 0.07 | *2.36 ± 0.05 | *1.91 ± 0.10 | *10.46 ± 0.45 | *247.13 ± 8.97 |
| 3C | 8.99 ± 0.32 | 4.42 ± 0.06 | 1.29 ± 0.06 | 1.53 ± 0.09 | 7.47 ± 0.33 | 296.45 ± 10.87 |

| | | | | | | |
|---|---|---|---|---|---|---|
| ^{a}polyphenols: expressed as mg of gallic acid equivalent/g of extracts, ^{b}reducing capacity: expressed as mg of gallic acid equivalent/g of extracts, ^{c,d,e} radical scavenging capacity, expressed as IC50: concentration (mg/mL) of sample able to capture 50% of radicals. ^{f}ascorbic acid: expressed as µg/g of dry weight. The values correspond to the averages ± d.s. of two independent experiments, carried out in triplicate (n = 6). The value with asterisk (between the couples of samples) are significatively different (p < 0.05, Tukey's test) ANOVA analysis. | | | | | | |

### v. Relative Antioxidant Capacity Index (RACI)

The values of the antioxidant capacity generated in the several methods in vitro (polyphenols, reducing capacity, DPPH, ^{·}NO e O^{2·-}) have been integrated from the statistical point of view in the relative antioxidant capacity index (RACI). RACI of each extract has been calculated from the average of the standard scores transformed by the raw data generated with the above-described antioxidant methods. The standard scores represent the distance between raw data and average, normalized with respect to standard deviation. The results of the antioxidant activity expressed as IC50 have been transformed in 1/IC50, before the RACI determination (Sun and Tanumihardjo, J. Food Sci. 2007, 72: 159-165*).*

Figure 10 shows the Relative Antioxidant Capacity Index (RACI) calculated on sporocarps grown on standard, cardoon substrates and on the other substrates object of sole right.

The tests carried out confirmed, for the mushrooms cultivated on the substrate according to the invention, an improvement of the anti-radical activity, an increase of the content of ascorbic acid and total polyphenols and an increase of the total reducing capacity, with respect to the mushrooms of the same strain cultivated on cardoon biomass-free substrates.

It is to be specified that the present invention also provides a kit for mushrooms home cultivation comprising the substrate according to the invention.

## Claims

1. Cultivation substrate for mushrooms growing comprising biomasses deriving from plants belonging to *Cardueae* tribe, in quantity between 11.6% and 46.5% wt with respect to the dry weight of said substrate.

2. Substrate according to claim 1 for growing mushrooms belonging to genus *Pleurotus, Cyclocybe, Gliocadium* or *Trichoderma.*

3. Substrate for growing mushrooms according to any one of claims 1-2, further comprising lignocellulosic biomass from cereals.

4. Substrate for growing mushrooms according to any one of claims 1-3, further comprising biomass rich in simple sugars, preferably chosen among: exhausted beet pulp, potato skins, waste fruit and cereal processing residues.

5. Substrate for growing mushrooms according to any one of claims 3-4, wherein biomass from plants belonging to *Cardueae* tribe constitutes at least a quarter of the lignocellulosic biomass.

6. Substrate for growing mushrooms according to any one of claims 4-5, wherein said lignocellulosic biomass (comprising biomass from *Cardueae*) and said biomass rich in simple sugars are provided in a dry weight ratio preferably about 1:1.

7. Substrate for growing mushrooms according to any one of claims 1-6, further comprising at least a stabilizer or pH adjusting agent.

8. Substrate for growing mushrooms according to any one of claims 1-7, comprising, with respect to the dry weight of the substrate:
a) 40-55 parts of lignocellulosic biomass, comprising at least 11 parts of biomass deriving from plants belonging to *Cardueae* tribe,
- 40-45 parts of biomass deriving from beet,
- 5-15 parts of calcium carbonate.

9. Substrate for growing mushrooms according to claim 8, comprising, with respect to the dry weight of the substrate, 10.7 parts of calcium carbonate.

10. Substrate for growing mushrooms according to claim 8 o 9, comprising, with respect to the dry weight of the substrate:
a) 44-50 parts of lignocellulosic biomass, comprising at least 11 parts of biomass deriving from plants belonging to *Cardueae* tribe.

11. Method to cultivate mushrooms comprising the use of a substrate for mushrooms growing according to one of claims 1 to 10.

12. Kit for mushrooms home cultivation comprising the substrate for mushrooms growing according to one of claims 1 to 10.
